(19) Europäisches Patentamt
European Patent Office
Office européen des brevets

(11) **EP 4 764 919 A1**

(12) **EUROPEAN PATENT APPLICATION**

(43) Date of publication:
24.06.2026  Bulletin 2026/26

(21) Application number: 25216368.8

(22) Date of filing: 17.11.2025

(51) International Patent Classification (IPC):
*G06F 21/56* (2013.01)    *G06N 3/045* (2023.01)

(52) Cooperative Patent Classification (CPC):
G06F 21/562; G06N 3/045; G06N 3/0455;
G06N 3/08; G06N 3/088; G06N 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 20.12.2024  US 202418990278

(71) Applicant: BlackBerry Limited
**Waterloo, Ontario N2K 0A7 (CA)**

(72) Inventors:
• SAQIB, Mohd
 **Waterloo, N2K 0A7 (CA)**
• FUNG, Benjamin Chin Ming
 **Waterloo, N2K 0A7 (CA)**
• DING, Honghui
 **Waterloo, N2K 0A7 (CA)**

(74) Representative: **Murgitroyd & Company
165-169 Scotland Street
Glasgow G5 8PL (GB)**

(54) **EXPLAINABLE MALWARE ANALYSIS**

(57)  Systems, methods, and software can be used to detect a malware file. In some aspects, a method includes: obtaining features from a binary file to be classified as either a malware file or a non-malware file; inputting the obtained features to a first trained machine learning model; outputting, by the first trained machine learning model, an encoded vector; inputting the encoded vector to a second trained machine learning model, the second trained machine learning model generating text as output; and outputting, by the second trained machine learning model, a human-understandable text explanation of malicious activities that can be performed by the binary file, the human-understandable text explanation being generated without executing the binary file, the text explanation enabling a classification of the binary file.

FIG. 5

## Description

### TECHNICAL FIELD

The present disclosure relates to explainable Artificial Intelligence (XAI) applied on malware classification problematic.

### BACKGROUND

Deep learning (DL) based malware binaries detection has received considerable attention in recent years, achieving state-of-the-art detection metrics. However, DL models often face the inherent challenge of being like black-box systems, making their decisions difficult to interpret. This is due to the fact that internal workings, decision-making processes, or predictions can be difficult to interpret or understand by humans. Sometimes, only a score, which can be a representative value of the probability that the file is malware is outputted by a DL model. This does not make it possible to easily understand which class of malware this file belongs to, or the reasons that led to obtaining such a value.

Reducing the opacity of malware classification models is particularly complex, as traditional explainable Artificial Intelligence (XAI) methods, commonly developed for natural language processing and image datasets, fail to capture the intricacies of malicious binaries.

Indeed, for instance, the technique I-MAD (mentioned in the article "Interpretable malware detector using Galaxy Transformer" by Miles Q Li et al., published in Computers & Security 108 (2021), 102371) introduces an interpretable neural network that reveals the importance of static features but neglects dynamic aspects or deep code connectivity.

Similarly, the CFGExplainer model (mentioned in the article "Cfgexplainer: Explaining graph neural network-based malware classification from control flow graphs" by Jerome Dinal Herath et al., published in 2022 52nd Annual IEEE/IFIP International Conference on Dependable Systems and Networks (DSN). IEEE, 172-184.) highlights potentially malicious nodes in the control flow graph (CFG) of a malware executable but lacked robust explanation capabilities.

None of these models provide high-level explanations accessible to users without a cybersecurity background.

Hence, there is a need to help non-experts in understanding the reasons of malware binaries classification.

### SUMMARY

Accordingly there is provided a method, computer program, and a system as detailed in the claims as follows.

### DESCRIPTION OF DRAWINGS

FIG. 1 depicts a schematic diagram showing an example system that provides a malware detection technique according to an implementation.

FIG. 2 is a flowchart showing an example operation for determining if a binary file is malicious, according to an implementation.

FIG.3 depicts how a list of printable strings, and/or a list of import/export features is converted into fixed-length vectors by the use of a SBERT (Sentence-Bidirectional Encoder Representations from Transformers) model.

FIG. 4 illustrates a process that converts a binary file into a dense vector by using a graph representation of the binary file.

FIG. 5 depicts an architecture of a first machine learning model and a second machine learning model according to an implementation.

FIGS. 6-11 show human-understandable text explanations generated by the architecture of FIG. 5.

FIG. 12 is a flowchart showing an example operation for training the first and second models, according to an implementation.

FIG. 13 depicts an exemplary architecture of a device that can execute the processes or methods mentioned in this document, or that can implement hardware features according to an implementation.

Like reference numbers and designations in the various drawings indicate like elements.

### DETAILED DESCRIPTION

Usually, a binary file (often also referred to as a binary or executable) is defined as a file that comprises data directly readable by a device's hardware or a virtual machine (typically in binary code, i.e., sequences of 0s and 1s) rather than in plain human-readable text. Most of binary files have a structured format or headers that provide information on how to read the data. There is a wide variety of binary files. For example, executable files (.exe, .bin, .dll) that comprise compiled code that the computer can execute directly represent a class of binary files. Executable files can either run standalone (like a program) or install software (like a setup or installer file) by unpacking and placing some necessary components in specific directories on a device. In addition, binary files or executable files require specific software or utilities for interpretation and are commonly opened by applications designed to handle their specific format. Another example of a binary file is a PE (Portable Executable) file or an ELF (Executable and Linkable Format) file, that are file formats used to store executable code and other data for programs on respectively Windows and Linux systems. They contain information necessary for the operating system to load and execute the program. Therefore, a binary file is a broad term that encompass any file that can be directly executed by a computer. For example, bytecodes that are intermediate code between source code and machine code can also be viewed as binary files. Indeed, even if bytecodes are not directly executed by the device's hardware, they can be considered as binary files as bytecodes are usually executed by a runtime environment (such as a Java Virtual Machine for Java bytecodes, or a Python interpreter for Python bytecodes). In addition, it should be noted that scripts written in languages like PowerShell can be compiled into binary executables. Indeed, tools like PyInstaller or py2exe can turn Python scripts into executable binaries. Attackers sometimes convert PowerShell or Python scripts into binary files to bypass script-blocking security tools. Therefore, binary files in this context can be associated with a lot of different high-level languages. Malicious scripts can be "packed" within a binary file using packers or obfuscators. The binary file may contain an embedded script that is unpacked or decrypted at runtime. Attackers use the binary representation approach to make it harder for signature-based antivirus to detect the script contents directly. Therefore, the analysis of binary files is an important aspect to take into consideration for protecting electronic devices. In the previous discussions, the examples of binary files were mainly related to computers. However, other electronic devices can use binary files. For example, Android Application Package (apk) files adopted by Android for apps distribution and installation can be viewed as binary files. Indeed, an .apk file is a container that holds compiled code in DEX (Dalvik Executable) format, which is used by Android's runtime to execute the app, with other components such as resources (i.e. images, sounds, and layouts), and manifest files that describe the app's structure and permissions. Another kind of binary files are iOS App Store Package (ipa) files which comprise compiled app code (in binary format for iOS devices' ARM architecture), as well as resources (images, audio, user interface files) and info.plist files comprising metadata about the app such as version information, permissions, configuration parameters, etc... The present disclosure can be applied to that kind of files.

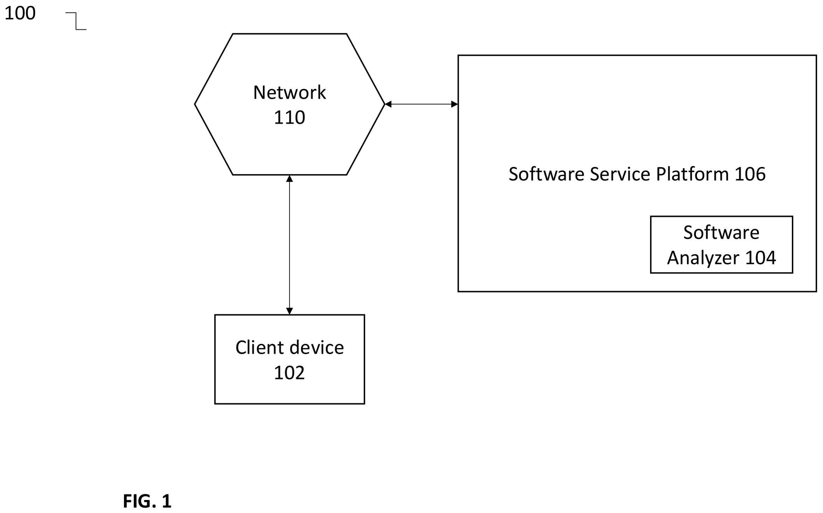

FIG. 1 depicts a schematic diagram showing an example system that provides a malware detection technique according to an implementation. More precisely, the system 100 includes a software service platform 106 that is communicatively coupled with a client device 102 over a network 110. The client device 102 represents an electronic device that provides a binary file to be analyzed. In some cases, the client device 102 can send a compressed or encrypted binary file to the software service platform 106 for a malware detection analysis. Hence, the software service platform 106 has to decompress or decrypt the binary file in this context. In some cases, the software service platform 106 can send the output of the malware detection analysis to the client device 102.

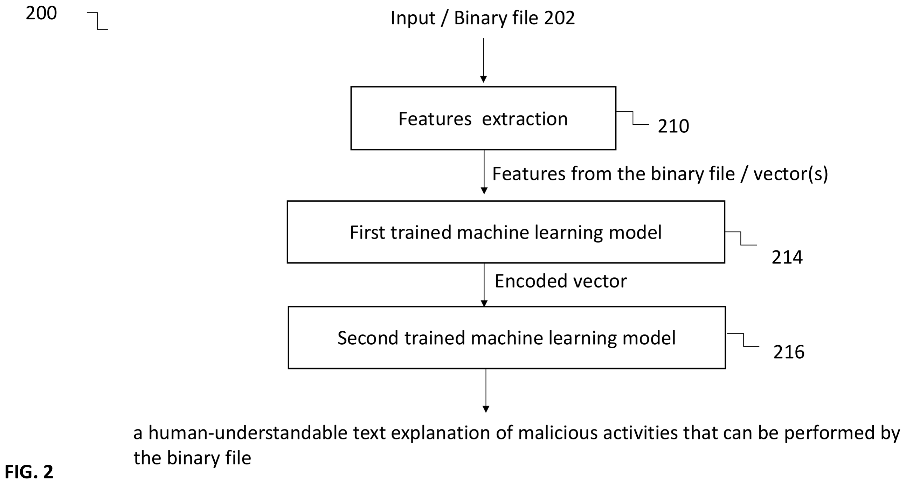

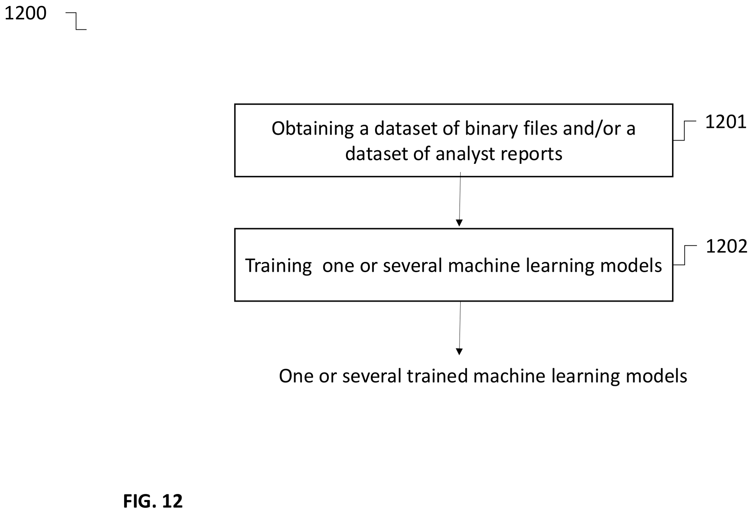

The software service platform 106 represents an application, a set of applications, software, software modules, hardware, or any combination thereof, that detects malware files. The software service platform 106 can be an application server, a service provider, or any other network entity. The software service platform 106 can be implemented using one or more computers, computer servers, or a cloud-computing platform. The software service platform 106 can be used to run trained machine learning models that are used in a malware detection process or malware analysis. In a variant, the software service platform 106 can also perform the training process discussed in FIG. 12 and associated descriptions. The software service platform 106 includes a software analyzer 104. The software analyzer 104 represents an application, a set of applications, software, software modules, hardware, or any combination thereof, that performs data preprocessing on a received binary file or a source code file. In some implementations, the software analyzer 104 can generate an encoded vector of the binary file, which is used as an input of a trained machine learning model as explained later in this document. FIGS. 2-5 and associated descriptions provide additional details of these implementations. In a variant, both the software analyzer 104 and the software service platform 106 are executed in the client device 102 itself. Indeed, more and more client devices, thanks to technological developments, are capable of running trained machine learning models locally. For example, iPhones that can be viewed as client devices are suitable for running machine learning models locally as they provide a core machine learning framework, a dedicated chip component such as the Apple neural engine (ANE) optimized for performing machine learning tasks.

Turning to a general description, the client device 102 may include, without limitation, any of the following: endpoint, computing device, mobile device, mobile electronic device, user device, mobile station, subscriber station, portable electronic device, mobile communications device, wireless modem, wireless terminal, or another electronic device. Examples of an endpoint may include a mobile device, IoT (Internet of Things) device, EoT (Enterprise of Things) device, cellular phone, personal data assistant (PDA), smart phone, laptop, tablet, personal computer (PC), pager, portable computer, portable gaming device, wearable electronic device, health/medical/fitness device, camera, vehicle, or other mobile communications devices having components for communicating voice or data via a wireless communication network. A vehicle can include a motor vehicle (e.g., automobile, car, truck, bus, motorcycle, etc.), aircraft (e.g., airplane, unmanned aerial vehicle, unmanned aircraft system, drone, helicopter, etc.), spacecraft (e.g., spaceplane, space shuttle, space capsule, space station, satellite, etc.), watercraft (e.g., ship, boat, hovercraft, submarine, etc.), railed vehicle (e.g., train, tram, etc.), and other types of vehicles including any combinations of any of the foregoing, whether currently existing or after arising. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used interchangeably herein.

The example system 100 includes the network 110. The network 110 represents an application, set of applications, software, software modules, hardware, or combination thereof, that can be configured to transmit data messages between the entities in the example system 100. The network 110 can include a wireless network, a wireline network, the Internet, or a combination thereof. For example, the network 110 can include one or a plurality of radio access networks (RANs), core networks (CNs), and the Internet. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, the fifth generation (5G), or any other radio access technologies. In some instances, the core networks may be evolved packet cores (EPCs).

While elements of FIG. 1 are shown as including various component parts, portions, or modules that implement the various features and functionality, nevertheless, these elements may instead include a number of sub-modules, third-party services, components, libraries, and such, as appropriate. Furthermore, the features and functionality of various components can be combined into fewer components, as appropriate.

FIG. 2 is a flowchart showing an example operation 200 for determining if a binary file is malicious, according to an implementation. The example operation 200 can be implemented by a software service platform, e.g., the software service platform 106 shown in FIG. 1. The example operation 200 shown in FIG. 2 can be implemented using additional, fewer, or different operations, which can be performed in the order shown or in a different order.

As illustrated in FIG. 2, a binary file 202 is processed by an extraction module in a step 210 to obtain features. As previously mentioned, a binary file can cover a lot of different structured files depending on the architecture it is going to be executed.

According to one implementation, the extraction module used in step 210 can rely on the TLSH (Trend Micro Locality Sensitive Hashing) hashing technique.

Indeed, for the given binary file, a device can determine a TLSH hash. Usually, a TLSH hash is a fixed-size hexadecimal string (usually around 70-80 characters long or 35 bytes) that represents various structural and statistical characteristics of the binary file. According to this embodiment, a vector can be obtained from a TLSH hash. For example, the hexadecimal strings of the TLSH are converted into decimal integers which are then normalized (to get values between 0 and 1). Each of these values is associated with a component of an obtained vector. In one implementation, the normalization is optional.

In one implementation, the extraction module used in step 210 can rely on the splitting of the binary file into chunks, and the use of hash functions such as SHA256, MD5, or other similar functions on these chunks. Then, the device obtains, for the given binary file, a concatenation of hash values that define a vector.

In one implementation, the extraction module used in step 210 can rely on a selection process that selects specific features from the binary file (such as an entropy value, statistics related to the content of the file, etc.). Then a hash function can be applied on these selected features to get a hash value associated with the binary file, and a vector can be derived from such hash value.

In one implementation, the extraction module used in step 210 can rely on the use of a spectral or signal processing techniques (such as the use of Fourier transforms or wavelets). Then, the output (such as coefficients) is converted into a vector.

In one implementation, the extraction module used in step 210 can rely on the use of N-gram encoding. The binary file is split into a sequence of N-bytes, and each of the group of N-bytes can be hashed and concatenated in order to obtain a vector associated with the binary file.

In one implementation, the extraction module used in step 210 can obtain from a header of the binary file several features. For example, if the binary file is a Portable Executable (PE) file, the features can be related to information such as ExportsNbDLL, SectionsMeanEntropy, and ResourcesMeanSize. Categorical data within this group can be encoded using a label encoder to ensure compatibility with the model (as the data provided to a model must be numerical data).

In one implementation, the extraction module used in step 210 can obtain import/export features: for example, import/export functionalities (such as functions, symbols, or libraries that are comprised in the import table and export table of the binary file) are categorized into eight subcategories: open, create, delete, close, resume, kill, call, and other. Then, the device encodes each element of these lists/subcategories by using the SBERT model (as described in the article *"Sentence-BERT: Sentence Embeddings using Siamese BERT-Networks"*, published in the Proceedings of the 2019 Conference on Empirical Methods in Natural Language Processing. Association for Computational Linguistics. The SBERT model outputs a vector (i.e. an embedding of an element of a list). Hence, the device can obtain different lists comprising the corresponding vectors/embeddings. Then, the device performs an aggregation of the vectors from a list (such as an average operation) to produce a uniform-sized vector representation. Hence, each individual subgroup is associated with a unique vector. Then, in one embodiment, these aggregated vectors can be concatenated into a unique vector.

In one implementation, the extraction module used in step 210 can select printable strings comprised in the binary file as features. This feature type contains extensive lists ranging from 500 to 2,000 entries/elements per binary file. Categories include DIR, email, sentences, keywords, files, IP addresses, and URLs. Using the same approach as for the processing of the import/ export features, the device determines subcategories for the printable strings. Then, each element of a group or list of printable strings from a subcategory is encoded by using the SBERT model. The embeddings of each group/list are then aggregated into a fixed-length vector.

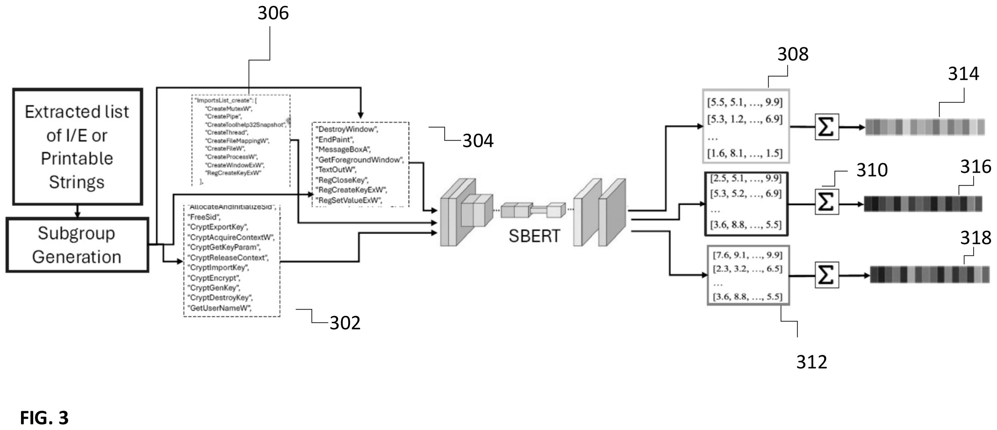

FIG.3 depicts how a list of printable strings, and/or a list of import/export features is converted into fixed-length vectors by the use of a SBERT model. Indeed, in this example, there are a group 302 of Microsoft Windows API functions used in security-related operations (such as for example the FreeSid API which is used for proper memory management when working with SIDs (i.e. Security Identifiers), or the CryptExportKey API, which is used to export cryptographic keys) that can be considered as import features, a group 304 of Windows API functions commonly used in GUI programming that can also be considered as import features, and a group 306 of imported functions. These groups result from an extraction and classification process performed by a device. Then, each element from a group is encoded using the SBERT model. Therefore, the device obtains three groups of vectors. The group 308 of vectors correspond to the encoding of the elements from the group 302, the group 310 of vectors correspond to the encoding of the elements of the group 304, and the group 312 of vectors correspond to the encoding of the elements of the group 306. Then, a unique vector is determined for each group of vectors. For example, the device can perform an average of the vectors from a group. Hence, the device determines a unique vector 314 for the group 308, a unique vector 316 for the group 310 and a unique vector 318 for the group 312. In a variant, the vectors 314, 316 and 318 are concatenated into a unique vector which is associated with the binary file.

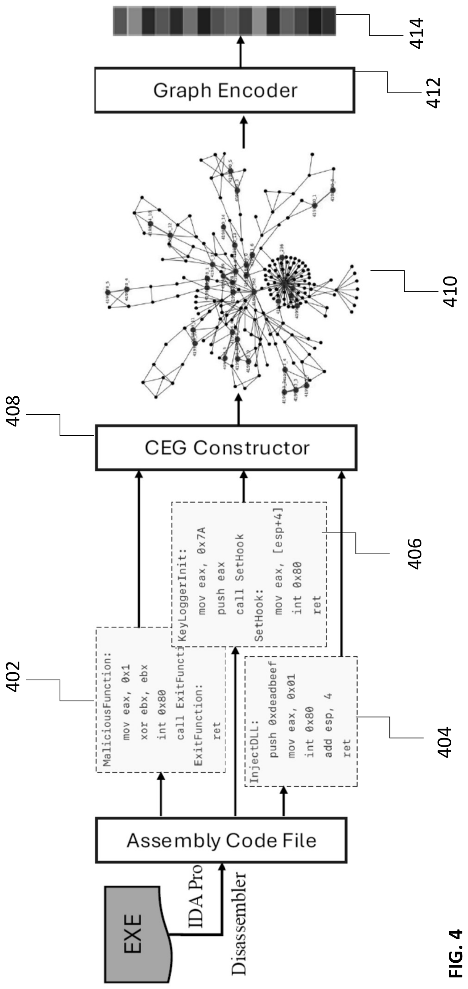

In one implementation, the extraction module used in step 210 can obtain features derived from a graph data representation of the binary file. Indeed, the device performs a disassembly step in order to convert the binary file into an assembly file (i.e. a file with assembly code instructions). Then, the device determines a graph representation from the assembly file. FIG. 4 illustrates this process schematically. The assembly code is split into function instructions blocks (i.e. different sets of assembly instructions associated with one or several functions as the blocks 402, 404 and 406), and provided as inputs to a Canonical Executable Graph constructor module 408 that generates a Canonical Executable Graph (CEG) representation of the binary file (as for example the graph data representation 410), wherein each node in the CEG representation is a numerical vector resulting from the encoding of a set of instructions using the PalmTree model (https://github.com/palmtreemodel). These instruction-level vectors were aggregated at the node level using an Auto-encoder (AED) architecture, effectively capturing both local and sequential information. The AED model, which integrates the strengths of autoencoders and sequence-to-sequence architectures, was trained on a dataset of 0.8 million assembly code blocks, each capped at 512 instructions. Using these embeddings, CEG representations were constructed based on the definitions outlined by Saqib et al. in the article "GAGE: Genetic Algorithm-based Graph Explainer for Malware Analysis" published in the proceedings of the 40th IEEE International Conference on Data Engineering (ICDE), IEEE Computer Society, Utrecht, Netherlands, 2258-2270. The CEG representation uniquely integrates both syntactical and semantic information into node embeddings, while edge features encapsulate the structural attributes of the binary file. Subsequently, a trained graph encoder 412 is used to generate for a given CEG representation, a unique dense vector 414. The trained graph encoder 412 has been trained on a dataset of 28.7 GB, comprising 2,411 CEGs from benign and malicious binaries. On average, each CEG representation contained 546 nodes and 3,567 edges, capturing intricate structural and behavioral information from the binaries. Hence, according to this embodiment, the extraction module used in step 210 outputs a unique dense vector 414.

It should be noted that the extraction module used in step 210 can implement one or several of the previous mentioned techniques. Hence, in one embodiment, n vectors obtained from different extraction techniques can be obtained, where n is an integer greater or equal 1. For example, the extraction module used in step 210 can generate 4 vectors: a vector related to the features from the header of the binary file, a vector related to the import/export features, a vector related to the printable strings features comprised in the binary file, and a vector related to the CEG representation of the binary file.

In one implementation, a feature-scaling technique (such as StandardScaler which is provided by the sklearn.preprocessing module in scikit-learn, or MinMaxScaler, etc.) is used. For example, each value component in a vector generated by the extraction module in step 210 is standardized by subtracting the mean of the vector and dividing by its standard deviation. The feature-scaling technique can be applied on all the vectors generated during step 210.

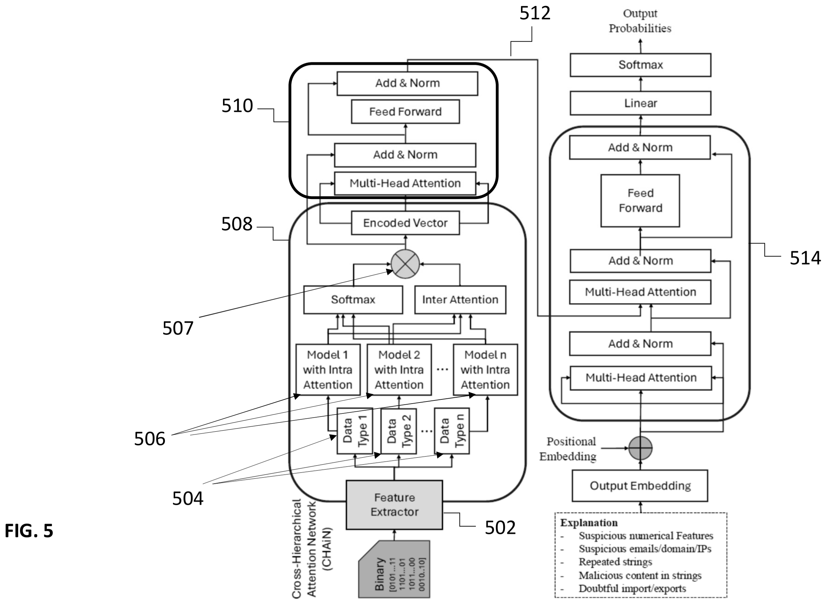

Once one or several vectors has been generated in step 210, it is provided as an input to a first trained machine learning model 214 in order to obtain a unique encoded vector. FIG.5 presents an architecture of the first trained machine learning model. Indeed, the blocks 508 and 510 detail the operations performed by this first trained machine learning model which is a trained encoder model. In one embodiment, the block 510 can be skipped. Hence, in one embodiment of the disclosure, the unique encoded vector outputted by the first trained machine learning model can be the vector 512 outputted by the block 510. In a variant, the unique encoded vector outputted by the first trained machine learning model can be the encoded vector mentioned in block 508.

It should be noted that the feature extractor 502 performs the same operations as in the step 210. Therefore, in one implementation, the feature extractor 502 can generate n vectors, each vector being associated with a data type 504. For example, one vector is associated with the data type 1 (i.e. the features from the header of the binary file), another vector is associated with the data type 2 (i.e. the import/export features), and so on. The block 508 comprises for each data type 504 (i.e. the $n$ vectors obtained from the feature extractor 502 or the step 210) a dedicated trained model or layer (i.e. the models 506) that can capture intra-relations among similar data features. More precisely, such model, given a modality input X (i.e. a vector of type $i$), determines in an intra-modality layer a weighted representation $H$ as follows:

$$H = Attention(Q, K, V) = softmax\left(\frac{QK^T}{\sqrt{d_k}}\right)V$$

where $Q$, $K$, $V$ are the query, key and value matrices respectively, and $d_k$ is the dimensionality of the keys.

Then, the outputs of the dedicated trained model or layer (i.e. the models 506) are combined in order to determine a vector representation $Z$:

$$Z = \sum_{i=1}^{n} \alpha_i H_i$$

where $H_i$ represents the output of the trained model or layer associated of the features of type $i$ and $n$ is the number of feature types; in addition, the elements $\alpha_i$ are the learned attention weights.

This cross-modality attention captures dependencies such as the significance of printable string patterns when specific PE header attributes are present. The final fused representation Z can be obtained through bilinear pooling:

$$Z_{fused} = \varphi(H_1, H_2, \dots, H_n),$$

where $\varphi$ denotes a bilinear transformation, Hence, $Z_{fused}$ is obtained from the merge operation 507 of the output of the softmax function and the output of the inter-attention layer.

As explained previously, the first trained machine learning model 214 outputs a unique encoded vector (such as in one implementation the encoded vector 512 or the vector representation $Z_{fused}$). This unique encoded vector is then provided as an input to a second trained machine learning model 216.

Part of the architecture of the second trained machine learning model 216 is depicted in the block 514 of the FIG. 5. It corresponds to a transformer decoder architecture comprising several layers, each with specific operations. The decoder takes two inputs: the vector representation $Z_{fused}$, and the generated sequence so far.

Indeed, in one implementation, the vector representation $Z_{fused}$ is provided as an input to a GPT (i.e. the second trained machine learning model that can be a Generative Pre-trained Transformer model) for generating an explanation of malicious activities that can be performed by the binary file associated with the vector representation $Z_{fused}$. The transformer decoder model uses attention mechanisms to identify dependencies and generate textual explanations:

$$Output_t = softmax(Linear\left(Decoder(Z_{fused})\right))$$

where *Decoder* represents the transformer decoder block such as the block 514 in FIG. 5. The generated attention weights from intra- and inter-modality layers enable interpretable explanations, highlighting which features or interactions influenced the final prediction.

Therefore, the output of the second trained machine learning model is a human-understandable text explanation that has been generated without having to execute the binary file; the text explanation enables a classification of the binary file even for non-experts in the security field. In addition, it is also possible to display probabilities for several words of the generated human-understandable text explanation, the probabilities being calculated during the generation process, and enabling a user to know how confident the second trained model is in predicting each word at a specific point during text generation. Based on the probabilities values, the color or size of the displayed human-understandable text explanation can change.

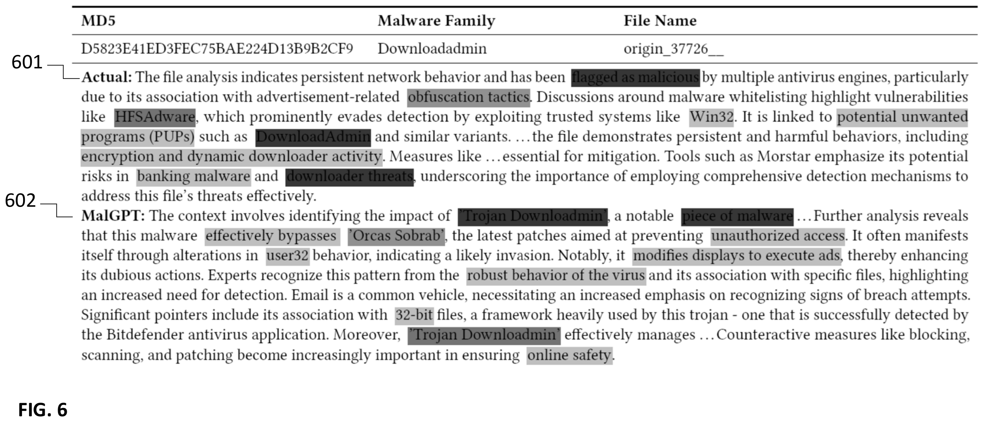

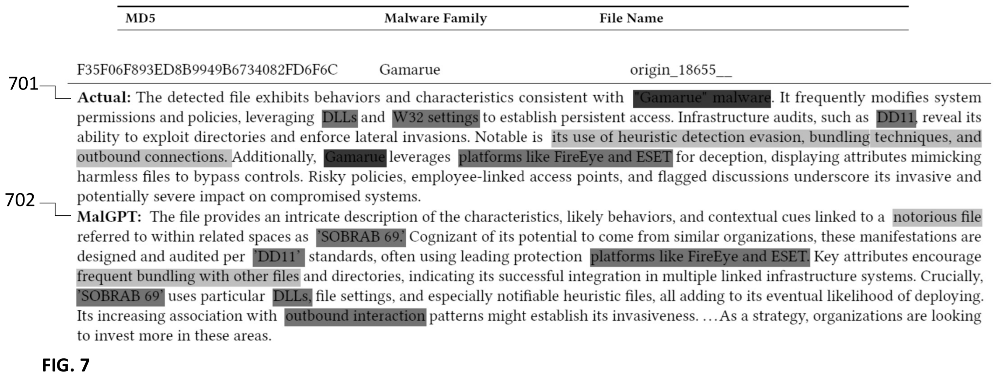

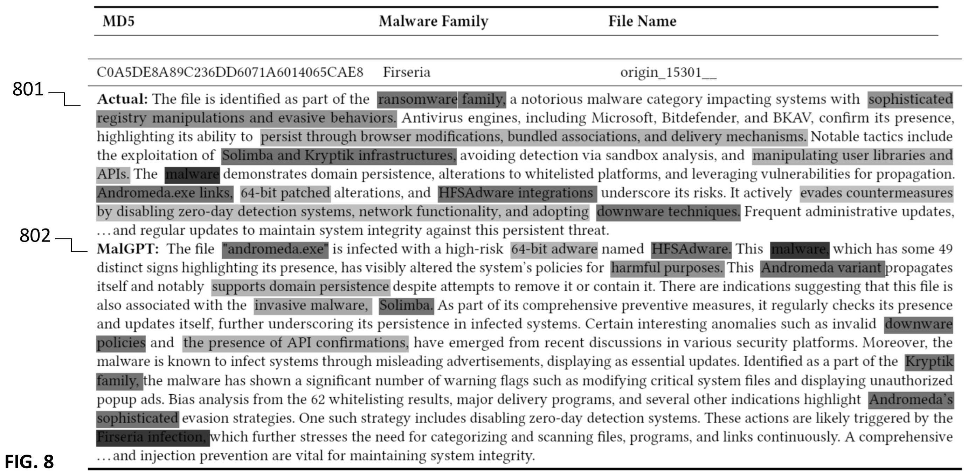

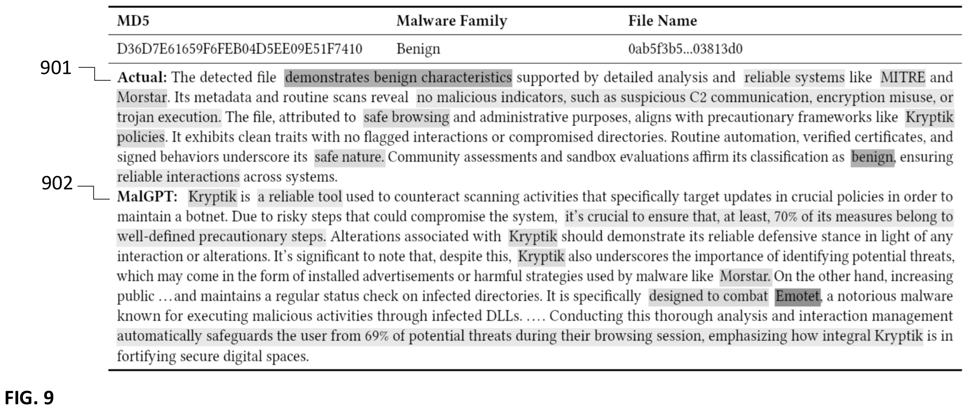

FIGS. 6 to 11 present a comparison of analyst reports of binary files associated with four malware families (Gamarue, DownloadAdmin, Emotet, Firseria) and associated with benign samples, human-understandable text explanation that has been generated according to one embodiment of the disclosure.

The analyst reports correspond to the references 601, 701, 801, 901, 1001 and 1101. The human-understandable text explanations generated the execution of the process of FIG. 2 correspond to the references 602, 702, 802, 902, 1002 and 1102.

The process of FIG. 2 exhibits an advanced ability to replicate key malicious attributes, integrating domain-specific knowledge such as identifying malware families, such as DownloadAdmin, and Firseria, including benign.

The DownloadAdmin malware family is categorized as potentially unwanted programs (PUPs) and adware. It frequently employs obfuscation techniques to bypass antivirus detection, manipulates system configurations, and displays intrusive advertisements. Known for its ability to download additional malicious files dynamically, it poses a risk by exploiting trusted frameworks like Win32 to evade detection. The process of FIG. 2 effectively identifies these behaviors, such as 'user32, and 'effectively bypasses' and 'modifies displays to execute ads', accurately capturing the obfuscation and downloader activities.

The Firseria malware family is a type of ransomware known for its ability to manipulate system registries and evade detection. It often employs sophisticated techniques such as API abuse, sandbox evasion, and persistent file modifications. The process of FIG. 2 extends its explanatory depth by replacing browser-related references (as noted in the actual explanation) with more specific behaviors such as 'domain persistence' and API-focused activities. Notably, the process of FIG. 2 highlights the involvement of Kryptik family and Andromeda.exe, effectively capturing key attributes of Firseria's infection strategies, including evasion techniques and API manipulation. This highlights Firseria's use of sophisticated frameworks for evasion and malicious propagation. Such detailed interrelations demonstrate the robust understanding of the binary's syntactical and semantic features provided by the process of FIG. 2.

Gamarue, is a modular botnet malware family designed for flexible, persistent infection. It often employs heuristic evasion techniques and exhibits behaviors such as 'frequent bundling with heuristic files' and 'outbound interaction patterns', which are central to its infection strategies. These behaviors allow it to propagate across systems by leveraging obfuscation and mimicking legitimate processes. Therefore, the process of FIG. 2 captures these traits effectively, contextualizing them within the broader framework of Gamarue's infection model. By highlighting these behaviors, the process of FIG. 2 demonstrates its ability to understand the malware's modular design, its dependency on heuristic-based evasion, and its capacity to establish persistent outbound connections for command-and-control (C2) communication. This nuanced understanding strengthens its capability to generate precise and actionable malware explanations.

The plausibility of explanations provided by the process of FIG. 2 is highlighted by its ability to match the key evidence in actual explanations. For example, in the Firseria family, the process of FIG. 2 connects critical tactics like 'persistence through browser manipulations' and 'delivery mechanisms', which align closely with the ground truth descriptions. Similarly, in the benign sample, the process of FIG. 2 accurately emphasizes secure characteristics such as 'reliable systems' and 'safe browsing policies', further bolstering its credibility. While highly plausible, certain discrepancies are noted. For example, in the Gamarue family, the process of FIG. 2 introduces an unrelated malware reference ('SOBRAB 69'), which slightly detracts from explanation precision. Similarly, for benign files, the generated explanation diverges by including unnecessary warnings about potential threats.

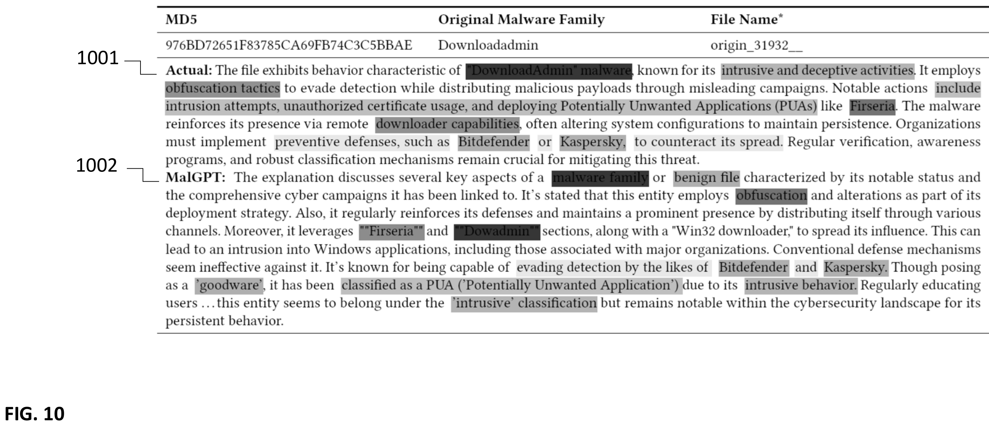

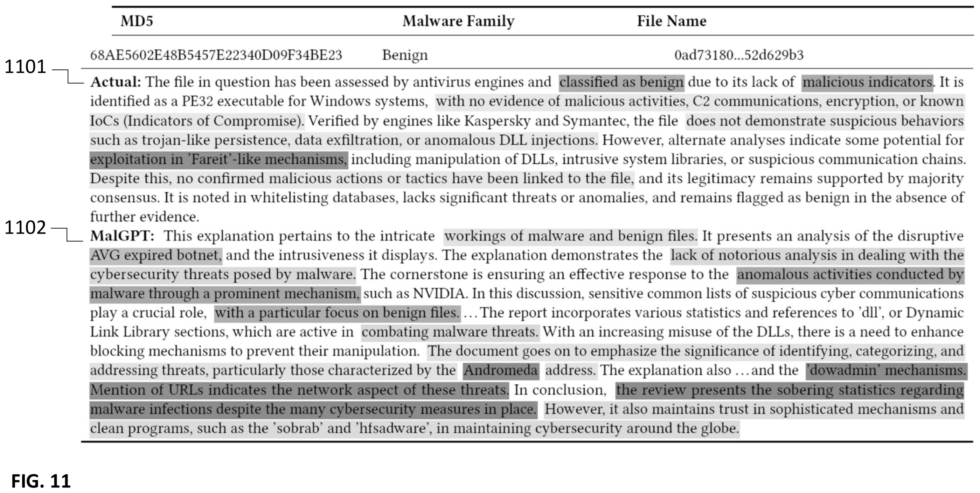

In addition, it should be noted that the process of FIG. 2 can be subject to hallucinations in the outputted human-understandable text explanation. The FIGS. 10 and 11 illustrates such phenomenon: the process of FIG. 2 demonstrates the ability to identify malicious activities like obfuscation and downloader behavior for DownloadAdmin. However, it introduces hallucinated elements, such as references to "Firseria sections", which are not explicitly relevant in the actual explanation. This misattribution might stem from the presence of the term "Firseria" in the actual explanation, where it was used in a different context. This highlights a limitation in distinguishing contextual relevance during explanation generation; in the benign example, hallucinated content introduces contradictions. For instance, phrases, "workings of malware and benign files" create confusion by blending opposing concepts. While the process of FIG. 2 correctly highlights benign characteristics, such as "with a particular focus on benign files," it simultaneously incorporates unrelated malicious terms, such as "botnet," "Andromeda," and "dowadmin mechanisms." This inconsistency likely arises from contextual overlaps in the training data. The intermixing of benign and malicious indicators underscores the need for enhanced precision when distinguishing intent categories to ensure coherent explanations.

In order to mitigate hallucinations, fine-tuning of the second trained machine learning model can be done, with additional reports or information concerning known malwares.

Enhancements such as improved contextual embedding and fine-tuning on more extensive labeled datasets can help refine the model's interpretability and reliability.

In one embodiment of the disclosure, the human-understandable text explanation comprises words or sentences that are highlighted either by highlighting in color (which may differ depending on the type of information), or by making the text bold or in a particular font, or with a different (larger) font size. For example, elements considered important in decision-making can be particularly highlighted (such as a name of a malware that can be related to the analyzed/processed binary file, a behavior that the binary file could have when executed, etc).

In another implementation, the human-understandable text explanation can be analyzed by another dedicated model which will make a decision about the file (quarantine, deletion, alarm generation, etc.). This dedicated model can also be a transformer-based model.

In a variant, a text-to-speech model can be used. Such model takes as input the human-understandable text explanation provided by the second trained machine learning model, then it processes it, and convert it into synthesized speech. For example, the volume can be higher or lower depending on how dangerous the file is. For example, if the binary file is analyzed automatically after downloading a file, or after receiving an e-mail to which it was attached, then it is not necessary to display the human-understandable text explanation, but only to inform a user through sound.

In a variant, the first trained machine learning model 214 can implement a State Space Model (SSM) module. Generally speaking a SSM module performs the following operations which evolves over time based on input $u(t)$:

$$s(t + 1) = A.s(t) + B.u(t)$$

$$y(t) = C.s(t) + D.u(t)$$

Where $A, B, C, D$ are learned matrices that govern state evolution and output mapping, $s(t)$ is a state vector (that represents a memory of past inputs), $u(t)$ is an input sequence at time $t$, and $y(t)$ is the output sequence at time $t$, which can be interpreted as a part of the encoded vector.

Hence, in one implementation, the input vector x corresponding to a concatenation of the n vectors outputted by the extraction module used in step 210 can be processed by the SSM module that processes the input vector x as a sequence, encoding it into a representation that captures the structural relationships in the corresponding binary file. More precisely, the device splits the input vector $x$ into smaller sub-vectors, each sub-vector being associated with a time step $t$. A state vector $s(0)$ is also initialized (to zero for example). For each time step $t$, the state vector is updated as follows $s(t + 1) = As(t) + Bu(t)$, and the output at time t is $y(t) = Cs(t) + Du(t)$. Then, all the values $y(t)$, determined for the different time step $t$, are combined in order to get an encoded vector that can be provided as input to the second trained machine learning model. The combination can be a concatenation or via a pooling function.

In a variant, the first trained machine learning model 214 can have an architecture that relies on a State Space Model (SSM) module such as the MAMBA architecture as detailed in FIG. 3 of the article: "Mamba: Linear-Time Sequence Modeling with Selective State Spaces" by Albert Gu, Tri Dao, published on arXiv.

In another variant, the first trained machine learning model 214 can be an encoder from a trained autoencoder model. Hence, the encoded vector outputted by the first trained machine learning model 214 corresponds to the vector from the latent space of the trained autoencoder model.

In a variant, the second trained machine learning model 216 is either a BERT (Bidirectional Encoder Representations from Transformers) model or a BART model (Bidirectional and Auto-Regressive Transformers).

According to one implementation, FIG. 12 is a flowchart presenting an example method 1200 for training a machine learning model to be used in the context described in FIG. 2.

It is commonly known that machine learning models are trained using a process that involves feeding them large amounts of data and allowing them to learn patterns and relationships within that data.

Therefore, it is important to obtain in a step 1201 a dataset of binary files having numerous different files. In one embodiment of the disclosure, several datasets can be obtained, and each dataset of binary files gather files of the same type (i.e. for example a first dataset with only ELF files, a second dataset with only EXE file, etc.). In a variant, a dataset comprising analyst reports generated using VirusTotal is obtained.

In one implementation, the dataset includes 23.296 GB of data (1,702 files) spanning five categories: four malware families (Gamarue, DownloadAdmin, Emotet, Firseria) and benign samples.

Then, each dataset of binary files and/or analyst reports is used to train a machine learning model either according to a supervised learning approach or an unsupervised learning approach. In the supervised learning approach, each dataset of binary files comprises for each binary file a label indicating the maliciousness of the file (that can be a label indicating to which family of malware the binary file is associated with, or a score that indicates a probability that the binary file is to be considered as a malware or malicious binary file).

The dataset is then split into a training dataset comprising 80% of the data from the dataset, and an evaluation dataset comprising 20% of the data from the dataset. In one implementation, the training dataset is further divided into an 80-20 split for training and validation purposes, ensuring robust evaluation and minimal overfitting during model development.

In one implementation, in order to train the first machine learning model and the second machine learning that are used in the process of FIG. 2, the training process can be performed as explained in the following.

According to one embodiment, both models operate under a supervised learning framework. The first model leverages feature engineering to convert binary files into numerical vectors that incorporate diverse representations of the binary features, functional behaviors, and characteristics. As illustrated in the FIG. 5, a Softmax layer combined with an inter-attention mechanism (depicted as reference 507) processes these vectors. The resulting representations are passed through additional processing steps, ultimately concluding with a Softmax classification layer to perform multi-class classification. The categorical cross-entropy loss is used to compute the classification error, ensuring accurate representation learning of malware behaviors.

The second model uses the encoded vector (from the first model) as input and follows an encoder-decoder architecture to generate human-readable textual explanations for the malware binary file. This process is also supervised, as ground-truth explanations corresponding to the malware binaries are available for the training. The model is trained to minimize sequence generation loss (e.g., categorical cross-entropy) by aligning the generated explanations with the ground truth.

If labels are unavailable (in an unsupervised scenario), techniques such as autoencoders or contrastive learning could be applied in the first stage to learn meaningful feature representations, while generative language models (e.g., using unsupervised objectives like language modeling) could be adopted in the second stage to generate explanations.

In one embodiment, the first machine learning model and the second machine learning are trained individually.

In a variant, the first machine learning model and the second machine learning are trained jointly.

The model training 1202 further comprises an evaluation step that evaluate the trained model on the testing dataset to assess its performance. Based on the results, either model refinement can be done (i.e. such as the adjustment of the hyperparameters of the model) or the training process can stop at this stage if the performance metrics fulfill a stopping criteria.

In a variant, when the first machine learning model comprises a SSM module or block, the SSM's parameters (i.e. the matrices $A, B, C, D$) can be learned through a training process involving a minimization process of a loss function that measures the discrepancy between the first machine learning model's output and the ground truth.

In one embodiment, once a trained machine learning model is obtained/generated (i.e. the first trained machine learning model, or the second trained machine learning model), it can be deployed to the software service platform 106.

The training process and deployment of a trained machine learning model can be reiterated regularly based on parameters of a security policy, the parameters defining for example a time range or frequency at which to carry out the training. In other case, a security alarm can be the event that trigger the launch of a new training of the one or several models. In a variant, users can report information about detected hallucinations. When the number of hallucinations collected from the users by the software service platform 106 exceeds a threshold value, a training action can be initiated/triggered.

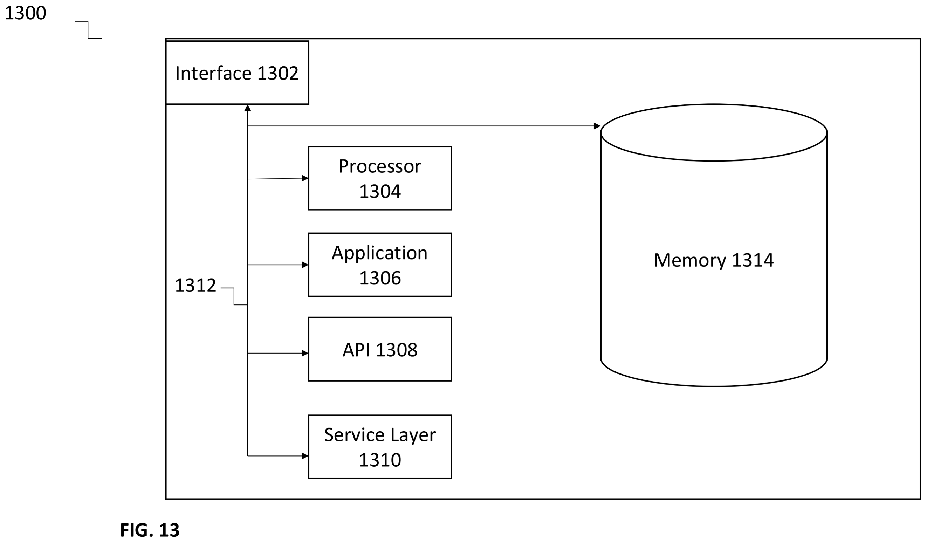

FIG. 13 illustrates a high-level architecture block diagram of a computer 1300 according to an implementation. The computer 1300 can be implemented as the client device 1302, the software service platform, or any combinations thereof. The computer 1300 can also be used to implement the operations discussed in FIG. 2. The described illustration is only one possible implementation of the described subject matter and is not intended to limit the disclosure to the single described implementation. Those of ordinary skill in the art will appreciate the fact that the described components can be connected, combined, and/or used in alternative ways consistent with this disclosure.

In some cases, the steps of FIG. 2 can be implemented in an executable computing code, e.g., C/C++ executable codes. In some cases, the computer 1300 can include a standalone Linux system that runs batch applications. In some cases, the computer 1300 can include mobile or personal computers.

The computer 1300 may comprise a computer that includes an input device, such as a keypad, keyboard, touch screen, microphone, speech recognition device, other device that can accept user information, and/or an output device that conveys information associated with the operation of the computer, including digital data, visual and/or audio information, or a GUI.

The computer 1300 can serve as a client, network component, a server, a database, or other persistency, and/or any other components. In some implementations, one or more components of the computer 1300 may be configured to operate within a cloud-computing-based environment.

At a high level, the computer 1300 is an electronic computing device operable to receive, transmit, process, store, or manage data. According to some implementations, the computer 1300 can also include or be communicably coupled with an application server, e-mail server, web server, caching server, streaming data server, business intelligence (BI) server, and/or other server.

The computer 1300 can collect data of network events or mobile application usage events over network 110 from a web browser or a client application, e.g., an installed plugin. In addition, data can be collected by the computer 1300 from internal users (e.g., from a command console or by another appropriate access method), external or third parties, other automated applications, as well as any other appropriate entities, individuals, systems, or computers.

Each of the components of the computer 1300 can communicate using a system bus 1312. In some implementations, any and/or all the components of the computer 1300, both hardware and/or software, may interface with each other and/or the interface 1302 over the system bus 1312 using an Application Programming Interface (API) 1308 and/or a service layer 1310. The API 1308 may include specifications for routines, data structures, and object classes. The API 1308 may be either computer language-independent or -dependent and refer to a complete interface, a single function, or even a set of APIs. The service layer 1310 provides software services to the computer 1300. The functionality of the computer 1300 may be accessible for all service consumers using this service layer. Software services, such as those provided by the service layer 1310, provide reusable, defined business functionalities through a defined interface. For example, the interface may be software written in JAVA, C++, or other suitable languages providing data in Extensible Markup Language (XML) format or other suitable format. While illustrated as an integrated component of the computer 1300, alternative implementations may illustrate the API 1308 and/or the service layer 1310 as stand-alone components in relation to other components of the computer 1300. Moreover, any or all parts of the API 1308 and/or the service layer 1310 may be implemented as child or sub-modules of another software module, enterprise application, or hardware module without departing from the scope of this disclosure.

The computer 1300 includes an interface 1302. Although illustrated as a single interface 1302 in FIG. 13, two or more interfaces 1302 may be used according to particular needs, desires, or particular implementations of the computer 1300. The interface 1302 is used by the computer 1300 for communicating with other systems in a distributed environment connected to a network (whether illustrated or not). Generally, the interface 1302 comprises logic encoded in software and/or hardware in a suitable combination and operable to communicate with the network. More specifically, the interface 1302 may comprise software supporting one or more communication protocols associated with communications such that the network or interface's hardware is operable to communicate physical signals within and outside of the computer 1300.

The computer 1300 includes at least one processor 1304. Although illustrated as a single processor 1304 in FIG. 13, two or more processors may be used according to particular needs, desires, or particular implementations of the computer. Generally, the processor 1304 executes instructions and manipulates data to perform the operations of the computer 1300. Specifically, the processor 1304 executes the functionality disclosed in FIG. 2.

The computer 1300 also includes a memory 1314 that holds data for the computer 1300. Although illustrated as a single memory 1314 in FIG. 13, two or more memories may be used according to particular needs, desires, or particular implementations of the computer 1300. While memory 1314 is illustrated as an integral component of the computer 1300, in alternative implementations, memory 1314 can be external to the computer 1300.

The application 1306 is an algorithmic software engine providing functionality according to particular needs, desires, or particular implementations of the computer 1300, particularly with respect to functionality required for anomaly detection. Although illustrated as a single application 1306, the application 1306 may be implemented as multiple applications 1306 on the computer 1300. In addition, although illustrated as integral to the computer 1300, in alternative implementations, the application 1306 can be external to the computer 1300.

There may be any number of computers 1300 associated with, or external to, and communicating over a network. Furthermore, this disclosure contemplates that many users may use one computer 1300, or that one user may use multiple computers 1300.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed. The computer storage medium is not, however, a propagated signal.

The terms "data processing apparatus," "computer," "computing device," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be, or further include special-purpose logic circuitry, for example, a central processing unit (CPU), a field-programmable gate array (FPGA), or an application specific integrated circuit (ASIC). In some implementations, the computer or computer-implemented system or special-purpose logic circuitry (or a combination of the computer or computer-implemented system and special-purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system, for example LINUX, UNIX, WINDOWS, MAC OS, ANDROID, or IOS, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a standalone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and computers can also be implemented as, special-purpose logic circuitry, for example, a CPU, an FPGA, or an ASIC.

Computers for the execution of a computer program can be based on general or special-purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device, for example, a universal serial bus (USB) flash drive, to name just a few.

Non-transitory computer readable media for storing computer program instructions and data can include all forms of permanent/non-permanent or volatile/non volatile memory, media and memory devices, including by way of example semiconductor memory devices, for example, random access memory (RAM), read only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto optical disks; and optical memory devices, for example, digital versatile/video disc (DVD), compact disc (CD) ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special-purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity or a multi-touch screen using capacitive or electric sensing. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface (GUI) can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back end, middleware, or front end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11x or other protocols, all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in XML format or other suitable formats. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

The separation or integration of various system modules and components in the previously described implementations should not be understood as requiring such separation or integration in all implementations, and it should be understood that the described program components and systems can generally be integrated together in a single software product or packaged into multiple software products.

Described implementations of the subject matter can include one or more features, alone or in combination.

In one implementation, the architecture proposed in FIG. 5, referenced as MalGPT, offers several innovative features to address challenges in malware analysis and explanation generation. One key feature is its ability to handle multi-modal data types, including numerical features, printable strings, import-export functions, and graph-based structural representations (e.g., Canonical Executable Graphs). By seamlessly integrating these heterogeneous feature modalities, MalGPT ensures a comprehensive understanding of malware binaries.

Another critical feature is its capability to capture inter- and intra-modality relationships. Through hierarchical attention mechanisms and advanced transformer-based architectures, MalGPT identifies subtle correlations within individual data types (intra-modality) and across diverse data sources (inter-modality). This allows the system to align syntactic patterns (e.g., assembly instructions) with semantic behaviors (e.g., obfuscation tactics or persistent network activity).

In one implementation, it is proposed a first feature that deals with a method for detecting a malware file, the method comprising:

obtaining features from a binary file to be classified as either a malware file or a non-malware file;

inputting the obtained features to a first trained machine learning model;

outputting, by the first trained machine learning model, an encoded vector;

inputting the encoded vector to a second trained machine learning model, the second trained machine learning model generating text as output; and

outputting, by the second trained machine learning model, a human-understandable text explanation of malicious activities that can be performed by the binary file, the human-understandable text explanation being generated without executing the binary file, the text explanation enabling a classification of the binary file.

A second feature, combinable with any of the previous or following features, relates to a method for detecting a malware file, wherein the second trained machine learning model is a decoder-only model or a BERT, Bidirectional Encoder Representations from Transformers, model or a BART, Bidirectional and Auto-Regressive Transformers, model.

A third feature, combinable with any of the previous or following features, relates to a method for detecting a malware file, wherein the decoder-only model is a GPT, Generative Pretrained Transformer, model that has been fine-tuned with a labeled dataset.

A fourth feature, combinable with any of the previous or following features, relates to a method for detecting a malware file, wherein the first trained machine learning model is an encoder-only transformer model comprising several intra-attention layers or self-attention layers, each intra-attention layer processing one type or category of features, and an inter-attention layer that applies an attention mechanism to each output of the intra-attention layers.

A fifth feature, combinable with any of the previous or following features, relates to a method for detecting a malware file, wherein the encoder-only transformer model further comprises a combination of each output of the intra-attention layers, and an output of the inter-attention layer.

A sixth feature, combinable with any of the previous or following features, relates to a method for detecting a malware file, wherein the first trained machine learning model comprises a State Space Model (SSM) module to encode the obtained features into the encoded vector being a dense vector.

A seventh feature, combinable with any of the previous or following features, relates to a method for detecting a malware file, wherein the first trained machine learning model is a trained encoder from a trained autoencoder architecture.

An eight feature, combinable with any of the previous or following features, relates to a method for detecting a malware file, wherein the features comprise header features from the binary file to be classified and/or API call sequences from the binary file to be classified and/or printable strings from the binary file to be classified and/or a graph-based Canonical Executable Graph (CEG) representation of the binary file to be classified.

A ninth feature, combinable with any of the previous or following features, relates to a method for detecting a malware file, wherein it further comprises disassembling the binary file to be classified that generates a disassembly file, and obtaining the API call sequences by processing the disassembly file.

A tenth feature, combinable with any of the previous or following features, relates to a method for detecting a malware file, wherein the first trained machine learning model and the second trained machine learning model have been trained separately.

An eleventh feature, combinable with any of the previous or following features, relates to a method for detecting a malware file, wherein the first trained machine learning model and the second trained machine learning model have been trained simultaneously, and wherein the second trained machine learning model is derived from a pre-trained model before been fined-tuned during the simultaneously training.

A twelfth feature, combinable with any of the previous or following features, relates to a method for detecting a malware file, wherein the human-understandable text explanation comprises words or sentences that are highlighted either by highlighting in color, or by making part of the human-understandable text explanation bold or in a particular font, or with a different font size.

A thirteenth feature, combinable with any of the previous or following features, relates to a method for detecting a malware file, wherein the highlighted words or sentences are selected based on a confidence probability outputted by the second trained machine learning model.

A fourteenth feature, combinable with any of the previous or following features, relates to a method for detecting a malware file, wherein inputting the obtained features comprises determining one or several input vectors from a processing of the features, and using the one or several input vectors as input of the first trained machine learning model.

The previously described example implementations do not define or constrain the present disclosure. Other changes, substitutions, and alterations are also possible without departing from the scope of the present disclosure.

In a variant, features previously mentioned can be implemented either in hardware or as a computer program.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

At last, according to an embodiment, some machine learning models can be run on Central Processing Unit (CPU) that are general-purpose processors that handle most types of computing tasks. In a variant, Graphics Processing Unit (GPU) which are specialized hardware designed for parallel computing can be used to run or train machine learning models mentioned in this document. Moreover, in a variant, Tensor Processing Unit (TPU) can be used. Therefore a device that comprises at least one of these different processors can execute part of the processes that involve the use of machine learning models.

**Claims**

1. A computer-implemented method for detecting a malware binary file, the method comprising:

   obtaining features from a binary file to be classified as either a malware file or a non-malware file;
   inputting the obtained features to a first trained machine learning model;
   outputting, by the first trained machine learning model, an encoded vector;
   inputting the encoded vector to a second trained machine learning model, the second trained machine learning model generating text as output; and
   outputting, by the second trained machine learning model, a human-understandable text explanation of malicious activities that can be performed by the binary file, the human-understandable text explanation being generated without executing the binary file, the text explanation enabling a classification of the binary file.

2. The computer-implemented method of claim 1, wherein the second trained machine learning model is a decoder-only model or a BERT, Bidirectional Encoder Representations from Transformers, model or a BART, Bidirectional and Auto-Regressive Transformers, model.

3. The computer-implemented method of claim 2, wherein the decoder-only model is a GPT, Generative Pre-trained Transformer, model that has been fine-tuned with a labeled dataset.

4. The computer-implemented method of any preceding claim, wherein the first trained machine learning model is an encoder-only transformer model comprising several intra-attention layers or self-attention layers, each intra-attention layer processing one type or category of features, and an inter-attention layer that applies an attention mechanism to each output of the intra-attention layers.

5. The computer-implemented method of claim 4, wherein the encoder-only transformer model further comprises a combination of each output of the intra-attention layers, and an output of the inter-attention layer.

6. The computer-implemented method of any one of claims 1 to 3, wherein the first trained machine learning model comprises a State Space Model, SSM, module to encode the obtained features into the encoded vector being a dense vector.

7. The computer-implemented method of any one of claims 1 to 3, wherein the first trained machine learning model is a trained encoder from a trained autoencoder architecture.

8. The computer-implemented method of any preceding claim, wherein the features comprise header features from the binary file to be classified and/or API call sequences from the binary file to be classified and/or printable strings from the binary file to be classified and/or a graph-based Canonical Executable Graph (CEG) representation of the binary file to be classified.

9. The computer-implemented method of claim 8, further comprising disassembling the binary file to be classified that generates a disassembly file, and obtaining the API call sequences by processing the disassembly file.

10. The computer-implemented method of any preceding claim, wherein the first trained machine learning model and the second trained machine learning model have been trained separately.

11. The computer-implemented method of any preceding claim, wherein the first trained machine learning model and the second trained machine learning model have been trained simultaneously, and wherein the second trained machine learning model is derived from a pre-trained model before been fined-tuned during the simultaneously training.

12. The computer-implemented method of any preceding claim, wherein the human-understandable text explanation comprises words or sentences that are highlighted either by highlighting in color, or by making part of the human-understandable text explanation bold or in a particular font, or with a different font size, optionally wherein the highlighted words or sentences are selected based on a confidence probability outputted by the second trained machine learning model.

13. The computer-implemented method of any preceding claim, wherein inputting the obtained features comprises determining one or several input vectors from a processing of the features, and using the one or several input vectors as input of the first trained machine learning model.

14. A computer program which, when executed on at least one processor, causes an electronic device to perform the method of any preceding claim.
    15.

15. A computer-implemented system, comprising:

   one or more computers; and
   one or more computer memory devices interoperably coupled with the one or more computers and having tangible, non-transitory, machine-readable media storing one or more instructions that, when executed by the one or more computers, perform the method of any one of claims 1 to 13.

EP 4 764 919 A1

100

**FIG. 1**

200 ⌐

Input / Binary file 202

↓

| Features  extraction | └─ 210 |

Features from the binary file / vector(s)

↓

| First trained machine learning model | └ 214 |

Encoded vector

↓

| Second trained machine learning model | └─ 216 |

↓

a human-understandable text explanation of malicious activities that can be performed by the binary file

**FIG. 2**

EP 4 764 919 A1

**FIG. 3**

Extracted list of I/E or Printable Strings

Subgroup Generation

SBERT

314
316
318
310
308
312
306
304
302

"ImportList_Create": [
"CreateMutexW",
"CreatePipe",
"CreateToolhelp32Snapshot",
"CreateThread",
"CreateFileMappingW",
"CreateFileW",
"CreateProcessW",
"CreateWindowExW",
"RegCreateKeyExW"
],

"DestroyWindow",
"EndPaint",
"MessageBoxA",
"GetForegroundWindow",
"TextOutW",
"RegCloseKey",
"RegCreateKeyExW",
"RegSetValueExW",

"AllocateAndInitializeSid",
"FreeSid",
"CryptExportKey",
"CryptAcquireContextW",
"CryptGetKeyParam",
"CryptReleaseContext",
"CryptImportKey",
"CryptEncrypt",
"CryptGenKey",
"CryptDestroyKey",
"GetUserNameW",

[5.5, 5.1, ..., 9.9]
[5.3, 1.2, ..., 6.9]
...
[1.6, 8.1, ..., 1.5]

[2.5, 5.1, ..., 9.9]
[5.3, 5.2, ..., 6.9]
...
[3.6, 8.8, ..., 5.5]

[7.6, 9.1, ..., 9.9]
[2.3, 3.2, ..., 6.5]
...
[3.6, 8.8, ..., 5.5]

EXE

IDA Pro
Disassembler

Assembly Code File

**402**

```
MaliciousFunction:
    mov eax, 0x1
    xor ebx, ebx
    int 0x80
    call ExitFuncti
ExitFunction:
    ret
```

**404**

```
InjectDLL:
    push 0xdeadbeef
    mov eax, 0x01
    int 0x80
    add esp, 4
    ret
```

**406**

```
KeyLoggerInit:
    mov eax, 0x7A
    push eax
    call SetHook
SetHook:
    mov eax, [esp+4]
    int 0x80
    ret
```

**408**

CEG Constructor

**410**

**412**

Graph Encoder

**414**

EP 4 764 919 A1

**FIG. 4**

20

Cross-Hierarchical Attention Network (CHAiN)

Binary [0101...11 1101...01 1011...00 0010..10]

502 Feature Extractor

504 Data Type 1 | Data Type 2 | ... | Data Type n

506 Model 1 with Intra Attention | Model 2 with Intra Attention | ... | Model n with Intra Attention

Softmax | Inter Attention

507

Encoded Vector 508

510 Add & Norm / Feed Forward / Add & Norm / Multi-Head Attention

512

Output Probabilities

Softmax
Linear
Add & Norm
Feed Forward
Add & Norm
Multi-Head Attention
Add & Norm
Multi-Head Attention

514

Positional Embedding

Output Embedding

Explanation
- Suspicious numerical Features
- Suspicious emails/domain/IPs
- Repeated strings
- Malicious content in strings
- Doubtful import/exports

FIG. 5

| MD5 | Malware Family | File Name |
|---|---|---|
| D5823E41ED3FEC75BAE224D13B9B2CF9 | Downloadadmin | origin_37726__ |

**Actual:** The file analysis indicates persistent network behavior and has been flagged as malicious by multiple antivirus engines, particularly due to its association with advertisement-related obfuscation tactics. Discussions around malware whitelisting highlight vulnerabilities like HFSAdware, which prominently evades detection by exploiting trusted systems like Win32. It is linked to potential unwanted programs (PUPs) such as DownloadAdmin and similar variants. …the file demonstrates persistent and harmful behaviors, including encryption and dynamic downloader activity. Measures like …essential for mitigation. Tools such as Morstar emphasize its potential risks in banking malware and downloader threats, underscoring the importance of employing comprehensive detection mechanisms to address this file's threats effectively.

**MalGPT:** The context involves identifying the impact of 'Trojan Downloadmin', a notable piece of malware …Further analysis reveals that this malware effectively bypasses 'Orcas Sobrab', the latest patches aimed at preventing unauthorized access. It often manifests itself through alterations in user32 behavior, indicating a likely invasion. Notably, it modifies displays to execute ads, thereby enhancing its dubious actions. Experts recognize this pattern from the robust behavior of the virus and its association with specific files, highlighting an increased need for detection. Email is a common vehicle, necessitating an increased emphasis on recognizing signs of breach attempts. Significant pointers include its association with 32-bit files, a framework heavily used by this trojan - one that is successfully detected by the Bitdefender antivirus application. Moreover, 'Trojan Downloadmin' effectively manages …Counteractive measures like blocking, scanning, and patching become increasingly important in ensuring online safety.

**FIG. 6**

| MD5 | Malware Family | File Name |
|---|---|---|
| F35F06F893ED8B9949B6734082FD6F6C | Gamarue | origin_18655__ |

**Actual:** The detected file exhibits behaviors and characteristics consistent with "Gamarue" malware. It frequently modifies system permissions and policies, leveraging DLLs and W32 settings to establish persistent access. Infrastructure audits, such as DD11, reveal its ability to exploit directories and enforce lateral invasions. Notable is its use of heuristic detection evasion, bundling techniques, and outbound connections. Additionally, Gamarue leverages platforms like FireEye and ESET for deception, displaying attributes mimicking harmless files to bypass controls. Risky policies, employee-linked access points, and flagged discussions underscore its invasive and potentially severe impact on compromised systems.

**MalGPT:** The file provides an intricate description of the characteristics, likely behaviors, and contextual cues linked to a notorious file referred to within related spaces as 'SOBRAB 69.' Cognizant of its potential to come from similar organizations, these manifestations are designed and audited per 'DD11' standards, often using leading protection platforms like FireEye and ESET. Key attributes encourage frequent bundling with other files and directories, indicating its successful integration in multiple linked infrastructure systems. Crucially, 'SOBRAB 69' uses particular DLLs, file settings, and especially notifiable heuristic files, all adding to its eventual likelihood of deploying. Its increasing association with outbound interaction patterns might establish its invasiveness. ...As a strategy, organizations are looking to invest more in these areas.

**FIG. 7**

| MD5 | Malware Family | File Name |
|-----|---------------|-----------|
| C0A5DE8A89C236DD6071A6014065CAE8 | Firseria | origin_15301__ |

**Actual:** The file is identified as part of the ransomware family, a notorious malware category impacting systems with sophisticated registry manipulations and evasive behaviors. Antivirus engines, including Microsoft, Bitdefender, and BKAV, confirm its presence, highlighting its ability to persist through browser modifications, bundled associations, and delivery mechanisms. Notable tactics include the exploitation of Solimba and Kryptik infrastructures, avoiding detection via sandbox analysis, and manipulating user libraries and APIs. The malware demonstrates domain persistence, alterations to whitelisted platforms, and leveraging vulnerabilities for propagation. Andromeda.exe links, 64-bit patched alterations, and HFSAdware integrations underscore its risks. It actively evades countermeasures by disabling zero-day detection systems, network functionality, and adopting downware techniques. Frequent administrative updates, …and regular updates to maintain system integrity against this persistent threat.

**MalGPT:** The file "andromeda.exe" is infected with a high-risk 64-bit adware named HFSAdware, This malware, which has some 49 distinct signs highlighting its presence, has visibly altered the system's policies for harmful purposes. This Andromeda variant propagates itself and notably supports domain persistence despite attempts to remove it or contain it. There are indications suggesting that this file is also associated with the invasive malware, Solimba, As part of its comprehensive preventive measures, it regularly checks its presence and updates itself, further underscoring its persistence in infected systems. Certain interesting anomalies such as invalid downware policies and the presence of API confirmations, have emerged from recent discussions in various security platforms. Moreover, the malware is known to infect systems through misleading advertisements, displaying as essential updates. Identified as a part of the Kryptik family, the malware has shown a significant number of warning flags such as modifying critical system files and displaying unauthorized popup ads. Bias analysis from the 62 whitelisting results, major delivery programs, and several other indications highlight Andromeda's sophisticated evasion strategies. One such strategy includes disabling zero-day detection systems. These actions are likely triggered by the Firseria infection, which further stresses the need for categorizing and scanning files, programs, and links continuously. A comprehensive …and injection prevention are vital for maintaining system integrity.

**FIG. 8**

| MD5 | Malware Family | File Name |
|---|---|---|
| D36D7E61659F6FEB04D5EE09E51F7410 | Benign | 0ab5f3b5...03813d0 |

**Actual:** The detected file demonstrates benign characteristics supported by detailed analysis and reliable systems like MITRE and Morstar. Its metadata and routine scans reveal no malicious indicators, such as suspicious C2 communication, encryption misuse, or trojan execution. The file, attributed to safe browsing and administrative purposes, aligns with precautionary frameworks like Kryptik policies. It exhibits clean traits with no flagged interactions or compromised directories. Routine automation, verified certificates, and signed behaviors underscore its safe nature. Community assessments and sandbox evaluations affirm its classification as benign, ensuring reliable interactions across systems.

**MalGPT:** Kryptik is a reliable tool used to counteract scanning activities that specifically target updates in crucial policies in order to maintain a botnet. Due to risky steps that could compromise the system, it's crucial to ensure that, at least, 70% of its measures belong to well-defined precautionary steps. Alterations associated with Kryptik should demonstrate its reliable defensive stance in light of any interaction or alterations. It's significant to note that, despite this, Kryptik also underscores the importance of identifying potential threats, which may come in the form of installed advertisements or harmful strategies used by malware like Morstar. On the other hand, increasing public …and maintains a regular status check on infected directories. It is specifically designed to combat Emotet, a notorious malware known for executing malicious activities through infected DLLs. …. Conducting this thorough analysis and interaction management automatically safeguards the user from 69% of potential threats during their browsing session, emphasizing how integral Kryptik is in fortifying secure digital spaces.

**FIG. 9**

| MD5 | Original Malware Family | File Name* |
|---|---|---|
| 976BD72651F83785CA69FB74C3C5BBAE | Downloadadmin | origin_31932__ |

**Actual:** The file exhibits behavior characteristic of "DownloadAdmin" malware, known for its intrusive and deceptive activities. It employs obfuscation tactics to evade detection while distributing malicious payloads through misleading campaigns. Notable actions include intrusion attempts, unauthorized certificate usage, and deploying Potentially Unwanted Applications (PUAs) like Firseria. The malware reinforces its presence via remote downloader capabilities, often altering system configurations to maintain persistence. Organizations must implement preventive defenses, such as Bitdefender or Kaspersky, to counteract its spread. Regular verification, awareness programs, and robust classification mechanisms remain crucial for mitigating this threat.

**MalGPT:** The explanation discusses several key aspects of a malware family or benign file characterized by its notable status and the comprehensive cyber campaigns it has been linked to. It's stated that this entity employs obfuscation and alterations as part of its deployment strategy. Also, it regularly reinforces its defenses and maintains a prominent presence by distributing itself through various channels. Moreover, it leverages ""Firseria"" and ""Dowadmin"" sections, along with a "Win32 downloader," to spread its influence. This can lead to an intrusion into Windows applications, including those associated with major organizations. Conventional defense mechanisms seem ineffective against it. It's known for being capable of evading detection by the likes of Bitdefender and Kaspersky. Though posing as a 'goodware', it has been classified as a PUA ('Potentially Unwanted Application') due to its intrusive behavior. Regularly educating users … this entity seems to belong under the 'intrusive' classification but remains notable within the cybersecurity landscape for its persistent behavior.

**FIG. 10**

| MD5 | Malware Family | File Name |
|---|---|---|
| 68AE5602E48B5457E22340D09F34BE23 | Benign | 0ad73180...52d629b3 |

**Actual:** The file in question has been assessed by antivirus engines and classified as benign due to its lack of malicious indicators. It is identified as a PE32 executable for Windows systems, with no evidence of malicious activities, C2 communications, encryption, or known IoCs (Indicators of Compromise). Verified by engines like Kaspersky and Symantec, the file does not demonstrate suspicious behaviors such as trojan-like persistence, data exfiltration, or anomalous DLL injections. However, alternate analyses indicate some potential for exploitation in 'Fareit'-like mechanisms, including manipulation of DLLs, intrusive system libraries, or suspicious communication chains. Despite this, no confirmed malicious actions or tactics have been linked to the file, and its legitimacy remains supported by majority consensus. It is noted in whitelisting databases, lacks significant threats or anomalies, and remains flagged as benign in the absence of further evidence.

**MalGPT:** This explanation pertains to the intricate workings of malware and benign files. It presents an analysis of the disruptive AVG expired botnet, and the intrusiveness it displays. The explanation demonstrates the lack of notorious analysis in dealing with the cybersecurity threats posed by malware. The cornerstone is ensuring an effective response to the anomalous activities conducted by malware through a prominent mechanism, such as NVIDIA. In this discussion, sensitive common lists of suspicious cyber communications play a crucial role, with a particular focus on benign files. ... The report incorporates various statistics and references to 'dll', or Dynamic Link Library sections, which are active in combating malware threats. With an increasing misuse of the DLLs, there is a need to enhance blocking mechanisms to prevent their manipulation. The document goes on to emphasize the significance of identifying, categorizing, and addressing threats, particularly those characterized by the Andromeda address. The explanation also ... and the 'dowadmin' mechanisms. Mention of URLs indicates the network aspect of these threats. In conclusion, the review presents the sobering statistics regarding malware infections despite the many cybersecurity measures in place. However, it also maintains trust in sophisticated mechanisms and clean programs, such as the 'sobrab' and 'hfsadware', in maintaining cybersecurity around the globe.

**FIG. 11**

1200

Obtaining a dataset of binary files and/or a dataset of analyst reports — 1201

Training one or several machine learning models — 1202

One or several trained machine learning models

**FIG. 12**

EP 4 764 919 A1

1300

Interface 1302

1312

Processor
1304

Application
1306

API 1308

Service Layer
1310

Memory 1314

**FIG. 13**

EP 4 764 919 A1

Europäisches
Patentamt

European
Patent Office

Office européen
des brevets

# EUROPEAN SEARCH REPORT

**Application Number**

EP 25 21 6368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 070 276 A (BEIJING TOPSEC NETWORK SECURITY TECH CO LTD) 24 May 2024 (2024-05-24) * the whole document * ----- | 1-15 | INV. G06F21/56 G06N3/045 |
| A | US 2024/061936 A1 (PAN AOCEN [CN] ET AL) 22 February 2024 (2024-02-22) * paragraph [0007] - paragraph [0071]; figures 1,3,4,5 * ----- | 1-15 | |
| A | CN 116 032 654 B (SHANDONG COMPUTER SCIENCE CT NAT SUPERCOMPUTER CT JINAN ET AL.) 30 June 2023 (2023-06-30) * the whole document * ----- | 1-15 | |

**TECHNICAL FIELDS SEARCHED (IPC)**

G06F
G06N
H04L
G06E

The present search report has been drawn up for all claims

| Place of search | Date of completion of the search | Examiner |
|---|---|---|
| Munich | 23 March 2026 | Jardak, Christine |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 21 6368

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2026

| Patent document cited in search report | | Publication date | Patent family member(s) | | Publication date |
|---|---|---|---|---|---|
| CN 118070276 | A | 24-05-2024 | NONE | | |
| US 2024061936 | A1 | 22-02-2024 | CN | 115080974 A | 20-09-2022 |
| | | | US | 2024061936 A1 | 22-02-2024 |
| CN 116032654 | B | 30-06-2023 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Interpretable malware detector using Galaxy Transformer. **MILES Q LI et al.** Computers & Security. 2021, vol. 108, 102371
- Cfgexplainer: Explaining graph neural network-based malware classification from control flow graphs. **JEROME DINAL HERATH et al.** Annual IEEE/IFIP International Conference on Dependable Systems and Networks (DSN). IEEE, 2022, 172-184
- Sentence-BERT: Sentence Embeddings using Siamese BERT-Networks. Proceedings of the 2019 Conference on Empirical Methods in Natural Language Processing. Association for Computational Linguistics
- **SAQIB et al.** GAGE: Genetic Algorithm-based Graph Explainer for Malware Analysis. *IEEE International Conference on Data Engineering (ICDE), IEEE Computer Society*, 2258-2270
- **ALBERT GU** ; **TRI DAO**. Mamba: Linear-Time Sequence Modeling with Selective State Spaces. *arXiv*